# DEMANDE DE BREVET EUROPEEN

(11) **EP 1 658 823 A1**
(43) Date de publication de la demande: **24.05.2006**
(21) Numéro de dépôt: 04405729.7
(22) Date de dépôt: 23.11.2004
(51) Int. Cl.: A61C 7/36

(54) **Appareil dentaire pour le réglage du positionnement du maxillaire inférieur**

(71) Demandeur: Valceschini, Michel, 1610 Châtillens/Oron (CH)
(72) Inventeur: Valceschini, Michel, 1610 Châtillens/Oron (CH); Baumgartner, Herni, 1092 Belmont (CH)
(74) Mandataire: Ganguillet, Cyril

(57) **Abrégé**

La gouttière supérieure (1) et la gouttière inférieure (2) sont adaptées aux arcades supérieure et inférieure de la denture de l'utilisateur. Elles sont reliées par les deux tirants (3) en forme de lames élastiques minces disposés dans le plan occlusal entre les gouttières. Les liaisons consistent en quatre pivots (4) ancrés partiellement dans les gouttières, dont les parties saillantes traversent les ouvertures (6) et (7) des tirants et qui sont bloqués par les clips (5). Un jeu de tirants (3) interchangeables de différentes longueurs permet l'ajustage de l'appareil.

## Description

La présente invention a pour objet un appareil dentaire pour le réglage du positionnement du maxillaire inférieur, comprenant deux gouttières s'adaptant respectivement à l'arcade supérieure et à l'arcade inférieure de la denture d'un utilisateur, et deux tirants reliés chacun par leurs extrémités d'une part à la gouttière supérieure et d'autre part à la gouttière inférieure de manière à solliciter cette dernière vers l'avant.

Les appareils dentaires pour le réglage du positionnement du maxillaire inférieur sont utilisés d'une part en orthodontie et d'autre part pour prévenir le ronflement et les apnées obstructives du sommeil.

On sait notamment que les manifestations pathologiques du sommeil telles que ronflement ou apnée du sommeil peuvent être prévenues en maintenant la mâchoire inférieure dans une position avancée par rapport à la mâchoire supérieure. De nombreux appareils capables de maintenir les mâchoires dans cet état ont déjà été proposés, mais ils présentent tous des défauts qui entravent leur application généralisée.

Un appareil dentaire du type défini plus haut est décrit dans la demande de brevet français ayant le numéro de publication 2 831 427, publiée le 2 mai 2003. Dans cette réalisation connue, la disposition des tirants est vestibulaire même s'ils sont conçus de manière à agir sur l'arcade dentaire inférieure dans une direction qui est sensiblement orientée selon le plan occlusal. Il en résulte un encombrement latéral gênant pour l'utilisateur. De plus, les tirants sont rigides et, de ce fait, constituent une entrave sensible à la mobilité de la mâchoire inférieure par rapport à la mâchoire supérieure, tant dans le sens latéral que longitudinal.

Le but de la présente invention est de remédier aux défauts des appareils dentaires connus pour le réglage du positionnement du maxillaire inférieur et, dans ce but, l'appareil selon l'invention se caractérise par le fait que les tirants sont des lames minces et sont montés en position occlusale entre les gouttières.

On décrit ci-après, à titre d'exemple, une forme d'exécution de l'appareil selon l'invention en mentionnant quelques variantes, et en se référant au dessin annexé dans lequel :
- les figures 1 et 2 sont des vues schématiques, respectivement en coupe verticale et en plan de dessus, montrant l'appareil en position d'utilisation;
- la figure 3 est une vue en plan à échelle agrandie d'un tirant;
- les figures 4 et 5 sont des vues respectivement en plan de dessus et en élévation d'un pivot de fixation d'un tirant sur une gouttière, et
- les figures 6 et 7 sont des vues respectivement en plan de dessus et en élévation d'un clip de blocage d'un tirant sur un pivot.

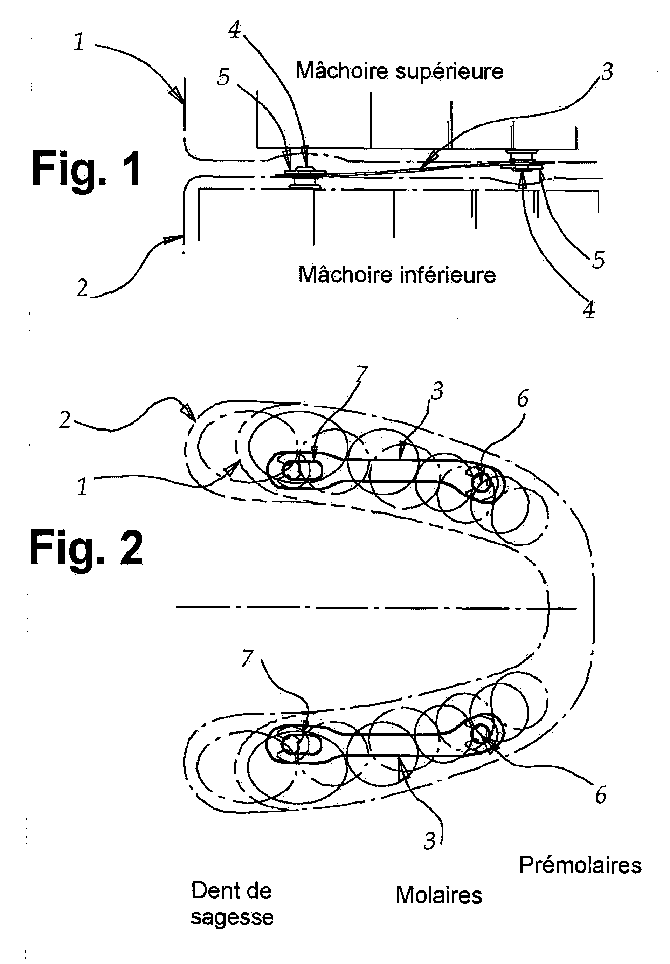

L'appareil représenté en position d'utilisation aux figures 1 et 2 se compose de deux gouttières 1 et 2, de deux tirants identiques 3, de quatre pivots 4 et de quatre clips élastiques 5.

Les gouttières 1 et 2 sont des éléments de même type que les composants correspondants des appareils analogues. Elles sont formées par moulage sur les arcades dentaires supérieure et inférieure de l'utilisateur auquel l'appareil est destiné. Le matériau des gouttières est de préférence une résine synthétique thermoformable biocompatible.

Des pivots 4 au nombre de quatre sont partiellement noyés dans les gouttières 1 et 2 à des emplacements soigneusement déterminés. Deux pivots 4 sont solidaires de la gouttière supérieure au voisinage de son extrémité avant, alors que les deux autres sont solidaires de la gouttière inférieure au voisinage de son extrémité arrière. Ils sont disposés dans la masse de leur gouttière respective de manière que les axes soient sensiblement verticaux, c'est-à-dire perpendiculaires au plan occlusal de contact des dentures. La partie active des pivots s'étend en saillie hors du plan qui limite la gouttière du côté occlusal. En outre, comme on le voit à la figure 2, la position des pivots 4 de la gouttière inférieure se trouve du côté intérieur de la gouttière, au niveau des premières ou deuxièmes molaires (dents numéros 46, 47 et 36, 37), tandis que la position des pivots 4 de la gouttière supérieure se trouve du côté extérieur de la gouttière, au niveau des canines ou des premières prémolaires (dents numéros 13, 14 et 23, 24). Ces dispositions ont été déterminées comme étant dans le cas général avantageuses, et on indiquera plus loin les raisons de ce choix, mais il va sans dire que des cas où des positions légèrement différentes seraient préférables, ne sont pas du tout exclus.

Les figures 1 et 2 montrent encore les positions des tirants 3. Ce sont des lames minces, de préférence métalliques, en un métal ayant une bonne capacité de déformation élastique, comme l'acier inoxydable par exemple. Ces lames, découpées à la forme visible à la figure 2, présentent chacune une ouverture antérieure 6 circulaire et une ouverture postérieure oblongue 7 au moyen desquelles elles sont engagées sur des portées supérieures, décrites plus loin, des pivots 4 alors que des bagues élastiques ouvertes 5, ayant fonction de clip, les retiennent en place. De cette manière les tirants 3 sont maintenus dans une position légèrement cintrée comme on le voit à la figure 1, qui représente d'ailleurs la situation dans des proportions exagérées. On notera encore que la gouttière supérieure 1 présente dans sa face occlusale une légère creusure à l'emplacement où vient se loger le pivot arrière de chaque tirant. De même, la gouttière inférieure 2 présente des creusures semblables à l'emplacement des pivots fixés à la gouttière supérieure. La largeur de ces creusures est choisie de préférence de façon à correspondre à l'amplitude des mouvements respectifs possibles entre les mâchoires supérieure et inférieure. Ainsi, l'utilisateur ayant les dents serrées, les gouttières sont pratiquement en contact l'une avec l'autre, sans gêne occlusale, les lames des tirants étant très minces. La déformation élastique des lames des tirants est minimale.

Avant d'expliquer les fonctions de l'appareil et les avantages qu'il offre, on montre encore quelques détails des différents constituants que sont les tirants 3, les pivots 4 et les bagues élastiques ou clips 5. Chaque tirant 3 comporte une partie centrale rectiligne 8, une partie arrière élargie 9 prolongeant la partie 8 et munie de l'ouverture oblongue 7, et une partie antérieure 10 s'étendant en oblique et munie de l'ouverture 6. Plusieurs paires de tirants dont les longueurs des parties 8 sont différentes peuvent être associées à chaque paire de gouttières pour réaliser des assortiments, ainsi qu'on le verra plus loin.

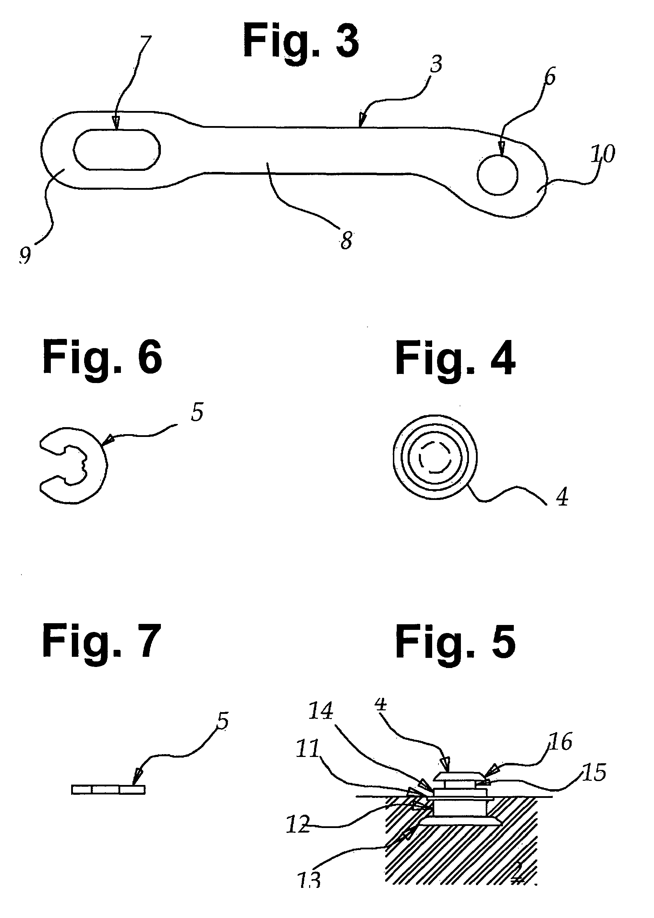

Les pivots 4, dont l'un est représenté aux figures 4 et 5, sont tous identiques mais peuvent se présenter en différentes variantes. La pièce 4 des figures 4 et 5 est de configuration cylindrique avec une partie noyée dans la gouttière, comportant deux collerettes 11 et 13 séparées par une portée 12 de diamètre réduit de manière à être ancrée dans la résine de la gouttière. La partie noyée du pivot pourrait aussi présenter des nervures circulaires et concentriques, par exemple ayant un profil triangulaire ou rectangulaire, ou muni de crans. Pratiquement, on creusera un trou borgne dans la gouttière à l'emplacement voulu et on placera le pivot 4 garni de résine liquide ou pâteuse dans ce trou afin qu'après solidification complète, le pivot soit pris dans une matière homogène. La partie saillante du pivot comporte une portée 14 de hauteur égale à l'épaisseur du tirant et de diamètre légèrement plus petit que le diamètre de l'ouverture 6 ou la largeur de l'ouverture 7, puis une gorge de hauteur et de diamètre correspondant au clip 5 et finalement une collerette supérieure 16 dont l'angle supérieur est arrondi et dont la fonction est de bloquer le clip tout en autorisant des mouvements de pivotement du tirant sur la gouttière.

Le clip 5 lui-même est représenté aux figures 6 et 7. Cette pièce peut aussi être en acier inoxydable. En variante, les clips métalliques en forme de rondelles ouvertes élastiques pourraient être remplacés par des O-rings.

Revenant à la figure 2, les particularités de l'appareil décrit se comprennent aisément. Par un choix judicieux des longueurs des tirants 3, l'appareil une fois mis en place provoque un effort de traction permanent sur la mâchoire inférieure par rapport à la mâchoire supérieure. En effet, les pivots de la gouttière inférieure sont en appui contre l'extrémité arrière des ouvertures oblongues 7 des tirants, alors que les pivots de la gouttière supérieure sollicitent les tirants par le bord des ouvertures 6. Les parties centrales 8 des tirants sont soumises à un effort de traction. Elles sont parallèles et symétriques par rapport à l'axe des mâchoires. L'effort sur la mâchoire inférieure s'exerce donc intégralement dans le plan occlusal.

Toutes les parties de l'appareil se trouvent entre les gouttières, de sorte que les espaces vestibulaires sont entièrement libres.

Malgré la présence de l'appareil, l'utilisateur garde la possibilité de nombreux mouvements de la mâchoire inférieure. Un mouvement d'avancement est possible en provoquant un déplacement des pivots arrière ancrés dans la gouttière inférieure, sans déplacement des tirants puisque ces pivots glissent le long de l'ouverture oblongue des tirants. Un déplacement latéral de la mâchoire inférieure est également possible, les tirants pivotant autour des pivots avant. Comme les axes des pivots sont parallèles et perpendiculaires au plan occlusal, une telle rotation ne cause aucune gène. Enfin, une possibilité limitée d'ouverture de la bouche est possible, les tirants se déformant en flexion entre les gouttières. Du fait de la rigidité relative des tirants, l'ouverture de la bouche reste limitée, ce qui implique une diminution de la combinaison des flux d'air bouche/nez sans gêner la respiration, même en cas de difficultés respiratoires (par exemple rhume, polypes, problèmes de cloisons nasales).

Le montage et le démontage de l'appareil, de même que sa mise en place sont très simples puisqu'il suffit d'engager ou de dégager les clips. Le fait de prévoir plusieurs paires de tirants de longueurs différentes avec chaque appareil facilite énormément l'obtention progressive du résultat visé.

## Revendications

1. Appareil dentaire pour le réglage du positionnement du maxillaire inférieur, comprenant deux gouttières (1, 2) s'adaptant respectivement à l'arcade supérieure et à l'arcade inférieure de la denture d'un utilisateur, et deux tirants (3) reliés chacun par leurs extrémités d'une part à la gouttière supérieure et d'autre part à la gouttière inférieure de manière à solliciter cette dernière vers l'avant, **caractérisé en ce que** les tirants sont des lames minces et sont montés en position occlusale entre les gouttières.

2. Appareil selon la revendication 1, **caractérisé en ce que** les tirants (3) sont reliés aux gouttières par des articulations comprenant des pivots (4) fixés aux gouttières et traversant des ouvertures (6, 7) ménagées aux extrémités des tirants, lesdites articulations permettant à l'utilisateur le déport latéral naturel de sa mâchoire inférieure.

3. Appareil selon la revendication 2, **caractérisé en ce que** les pivots (4) sont partiellement noyés dans les gouttières (1, 2) dans des positions telles que les extrémités arrière des tirants se trouvent du côté intérieur de l'arcade dentaire inférieure et les extrémités avant du côté extérieur de l'arcade dentaire supérieure, les parties centrales rectilignes (8) des tirants étant parallèles entre elles et parallèles à l'axe de symétrie des mâchoires.

4. Appareil selon la revendication 3, **caractérisé en ce que** les ouvertures (7) de l'extrémité arrière des tirants sont allongées dans le sens de la longueur du tirant, de manière à permettre un déplacement relatif longitudinal entre les mâchoires.

5. Appareil selon la revendication 2, **caractérisé en ce que** les axes des articulations sont parallèles et sensiblement perpendiculaires au plan occlusal des arcades dentaires de l'utilisateur.

6. Appareil selon la revendication 2, **caractérisé en ce que** les pivots (4) sont équipés de clips (5) amovibles ou de bagues en formes de O-ring bloquant les tirants après leur mise en place.

7. Appareil selon la revendication 2, **caractérisé en ce que** les lames des tirants sont en un matériau élastique permettant une ouverture limitée des mâchoires de l'utilisateur.

8. Appareil selon la revendication 7, **caractérisé en ce que** les tirants sont des lames métalliques.

9. Appareil selon la revendication 1, **caractérisé en ce que** la longueur des tirants est telle que leurs extrémités liées aux gouttières se trouvent, pour l'extrémité arrière inférieure au niveau des premières ou deuxièmes molaires, et pour l'extrémité avant au niveau des canines ou des premières prémolaires.

10. Appareil selon la revendication 1, **caractérisé par** un ensemble de tirants (3) interchangeables.

11. Ensemble d'éléments pour la réalisation de l'appareil selon l'une quelconque des revendications 1 à 10, **caractérisé par** quatre pivots à monter rigidement dans les gouttières et un jeu de paires de tirants munis d'ouvertures s'engageant sur les pivots ayant des longueurs différentes pour permettre un ajustage progressif de l'appareil, et quatre clips de fixation amovibles.
